# DEMANDE DE BREVET EUROPEEN

(11) **EP 1 467 276 A2**
(43) Date de publication de la demande: **13.10.2004**
(21) Numéro de dépôt: 04290116.5
(22) Date de dépôt: 15.01.2004
(51) Int. Cl.: G06F 1/18

(54) **Boîtier pour ordinateur**

(30) Priorité: 21.01.2003 FR 0300595
(71) Demandeur: Laurens, Frédéric, 04700 La Brillanne (FR)
(72) Inventeur: Laurens, Frédéric, 04700 La Brillanne (FR)

(57) **Abrégé**

Il s'agit d'une forme innovante d'intégration de composants informatiques destinés a produire un ordinateur dans une forme de boîtier radicalement différente et inexistante sur le marché.

Son rendu visuel global aboutit a un ordinateur de forme globalement cylindrique , dont les composants internes utilisés sont dits « standards » ( formats non propriétaire ) qui de ce fait et de plus sont proposés couramment sur le marché.
L'ordinateur obtenu dispose aussi de caractéristiques équivalentes a celles proposées par les ordinateurs distribués aujourd'hui mais qui eux sont proposés sous forme de boîtiers bien plus traditionnels ou conventionnels , appelés « tour » , « desktop » ou encore « mini-pc » .

Les périphériques externes raccordables autour de ce nouveau concept sont typiquement identiques a ceux disponibles et existant sur le marché pour les ordinateurs actuels .

L'ensemble de ces caractéristiques confère a cette nouvelle catégorie d'ordinateurs une intégration aisée et quasi « transparente » pour le client.

## Description

La présente invention consiste a réaliser un nouveau type de boîtier destiné a la construction d'ordinateur .
Il s'agit en fait d'une nouvelle forme globale de mise en oeuvre de composants traditionnels qui constituent les ordinateurs , une mise en oeuvre de ces composant mais dans un boîtier de forme globalement cylindrique ( assimilable ).

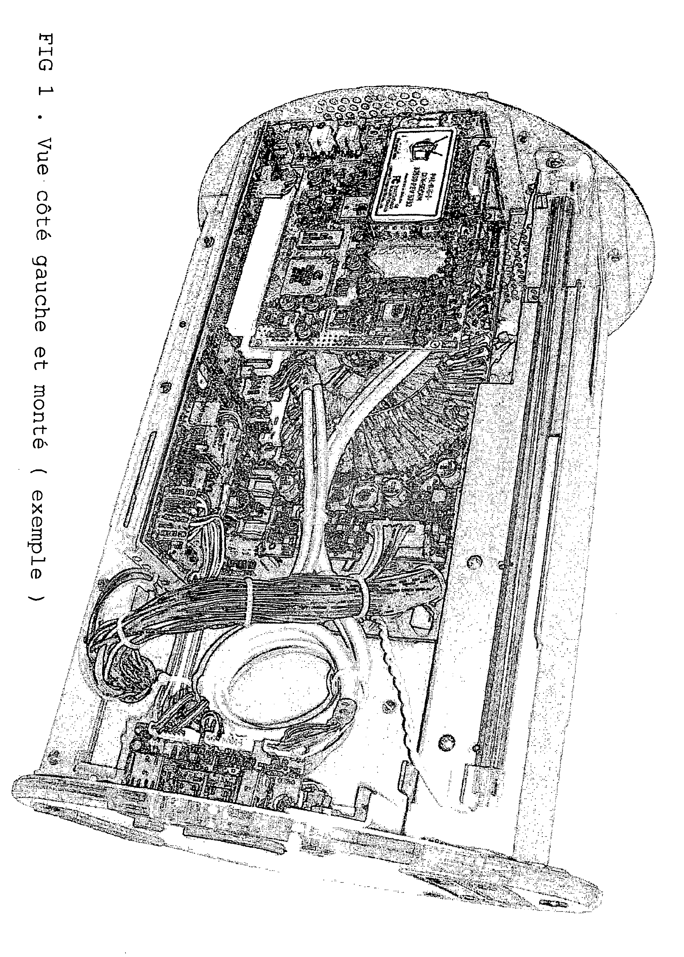

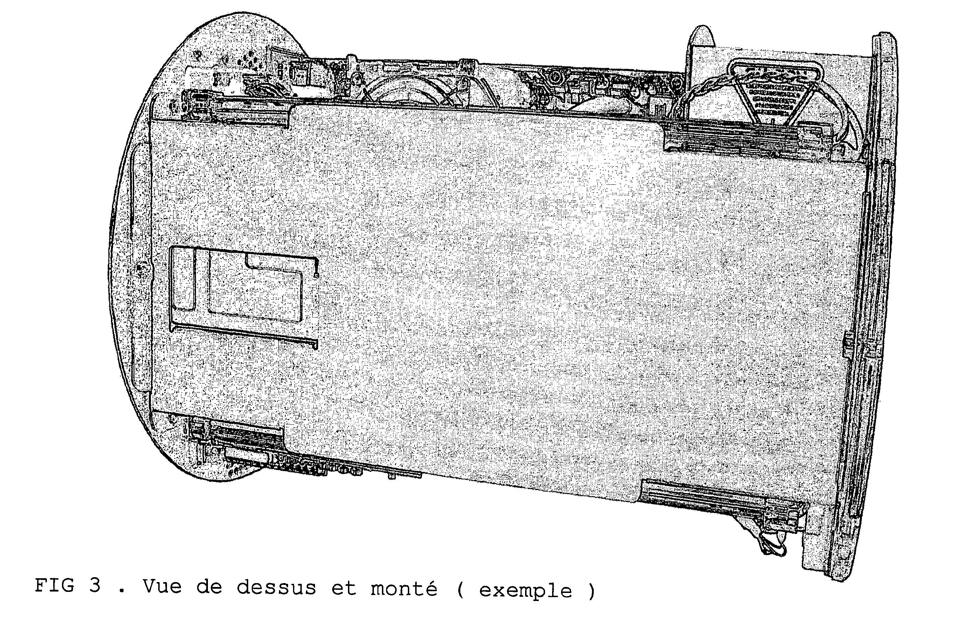

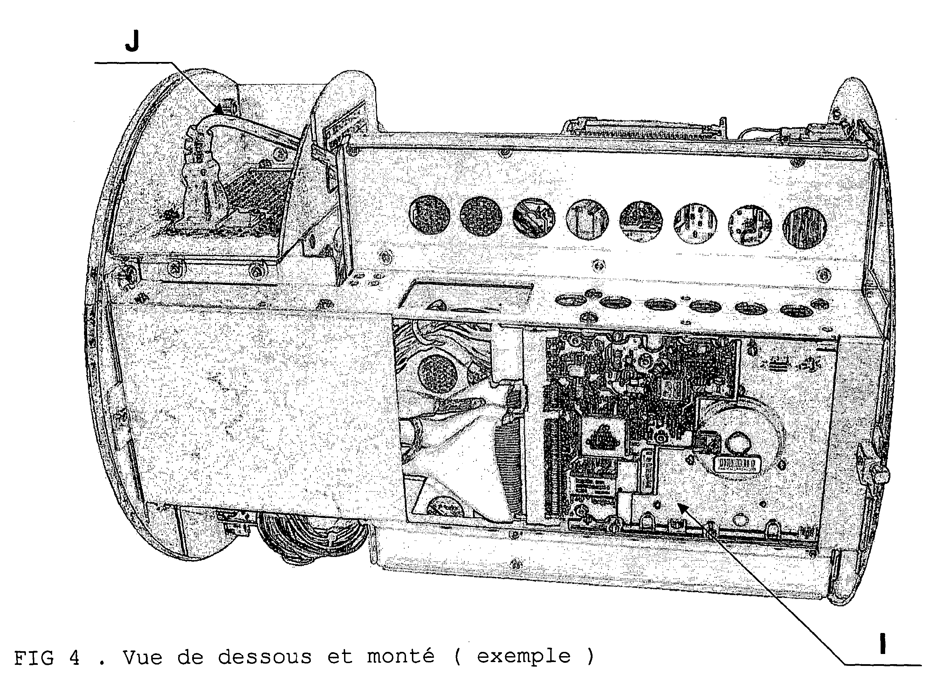

Ce nouveau concept de forme induit des solutions différentes de placement et de montage de composants au sein de ce nouveau type de boîtier d'ordinateur.
Par le biais des figures 1 , 2 , 3 , 4 , 5 , 6/9 , on illustre un exemple possible d'intégration des ces composants informatiques. Ceci est le résultat de plusieurs recherches , analyses et documentations spécialisées dans le domaine de l'informatique qui amènent a constater l'absence de ce type de produit sur ce marché.

Ce nouveau concept est bien entendu tout a fait envisageable dans le cadre d'une production de masse ( production industrielle ) et destiné pour le marché du grand public , du moins , destiné a être utilisé par tout individu , soit a titre personnel et privé ( cadre de l'habitat individuel - utilisation familiale ) mais encore destiné aussi aux utilisations professionnelles ( Petites et Moyennes Entreprises ( PME ) ou toutes autres catégories d'industrie .

Toujours dans ce cadre de production de masse , il tient compte des contraintes d'achats de composants ( contraintes de disponibilité ) par l'utilisation de composants tout a fait traditionnels ( au niveau carte mère - disques durs - processeurs et leur système de refroidissement - périphériques types « CD-ROM » - mémoires - cartes graphiques ... ) en résumé , tous les composants nécessaires pour construire un ordinateur a part entière .
En parallèle de l'aménagement des contraintes d'achat de marchandises ( du fait qu'il s'agisse de composants standards avec leur disponibilité bien plus simple ) , ce projet tient également compte des contraintes de montage de chacun de ces composants « standards » puisque toutes les pièces à monter a l'intérieur de ce boîtier sont prévues pour être assemblées indépendamment et a peu près dans n'importe quel ordre ( pas plus contraignant que la procédure de montage de ces même composants au sein d'un boîtier existant ) - ce qui évite concrètement le problème de « gestion de reliquat » ( bien entendu , certains ordres de montages sont imposés mais ne sont pas issus du fait de la forme globale de ce nouveau boîtier

### Exemples concrets :

Ex.1 : Le processeur ne peut être présent et intégré dans ce boîtier qu'a partir du moment où la carte mère elle-même est réceptionnée !
Ex. 2 :La mise en place des cartes d'extensions « AGP » et « PCI » ne pourront être intégrées a l'ensemble de l'ordinateur ( au même titre que l'exemple précédent ) qu'a partir du moment où la carte mère sera elle-même intégrée au sein du boîtier )

Pour compléter l'éventuel processus de production de masse , en prolongement de l'aménagement au mieux des contraintes d'intégration des composants durant leur phase montage ( orientation et le placement ) , le processus global prévoit également la facilitation du remplacement des pièces défectueuses durant la première mise sous tension de l'ordinateur assemblé ou généralement , au cours des différentes procédures de tests matériel mis en place par la suite.

Clairement , dans le même ordre d'idée que l'ordre d'assemblage , il reste possible de remplacer l'une ou l'autre pièce déclarée défectueuse durant les tests sans devoir désassembler forcément d'autres pièces qui elles ne sont pas défectueuses, mais gêneraient l'accès de la pièce a changer ( par exemple, il ne serait pas nécessaire de dissocier une des cartes « PCI » pour accéder a une barrette mémoire ).

En dehors de la forme globale du produit , et de sa fabrication de base - il propose également des solutions de personnalisation , tant bien au niveau de sa face avant que sur son les côtés latéraux du produit .

### Les solutions de personnalisations ( « customisation » ):

Elles seront soit apportés par un changement simple ( ex : pose d'une sérigraphie / d'un pré imprimé ) opération accessible pour l'utilisateur final , le revendeur ou le fabricant du produit , le tout étant applicable soit à la zone de la face avant du boîtier ( où l'on prévoit une face avant amovible , transparente et démontable ) ou pour les zones latérales du produit ( où il est possible d'apposer un film imprimé ).Cette première catégorie de customisation sera dite « superficielle »

En dehors du type de customisation citée précédemment , il est également possible d'appliquer un type de customisation plus approfondie qui s'exerce sur la modification mécanique même de certaines parties du boîtier. Au même titre que la catégorie dite « superficielle » , elle s'applique également soit a la zone avant du produit , soit en zone latérale - on définira pour la suite de la description du produit cette customisation appelée par exemple « customisation lourde » .

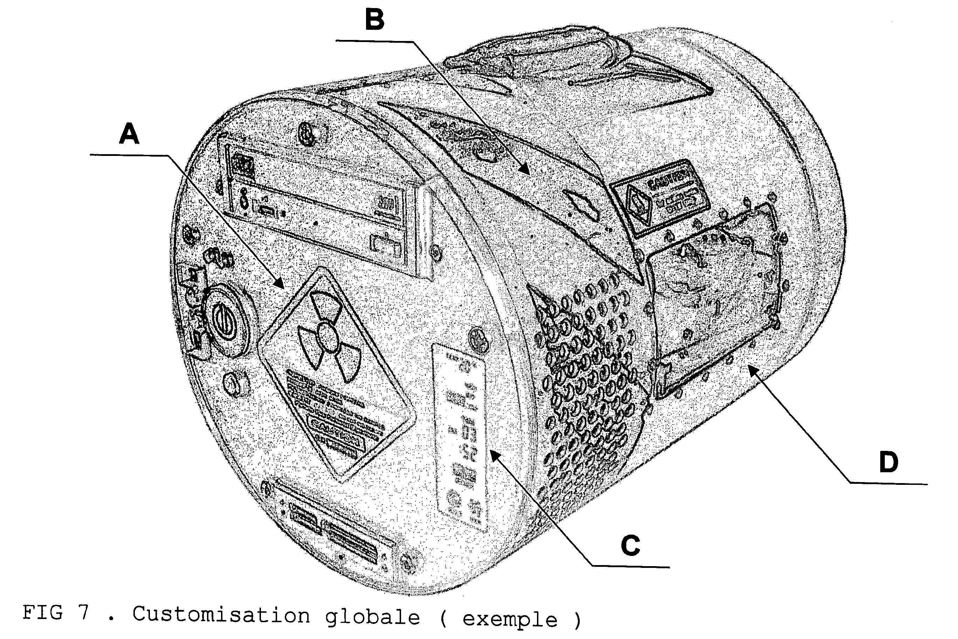

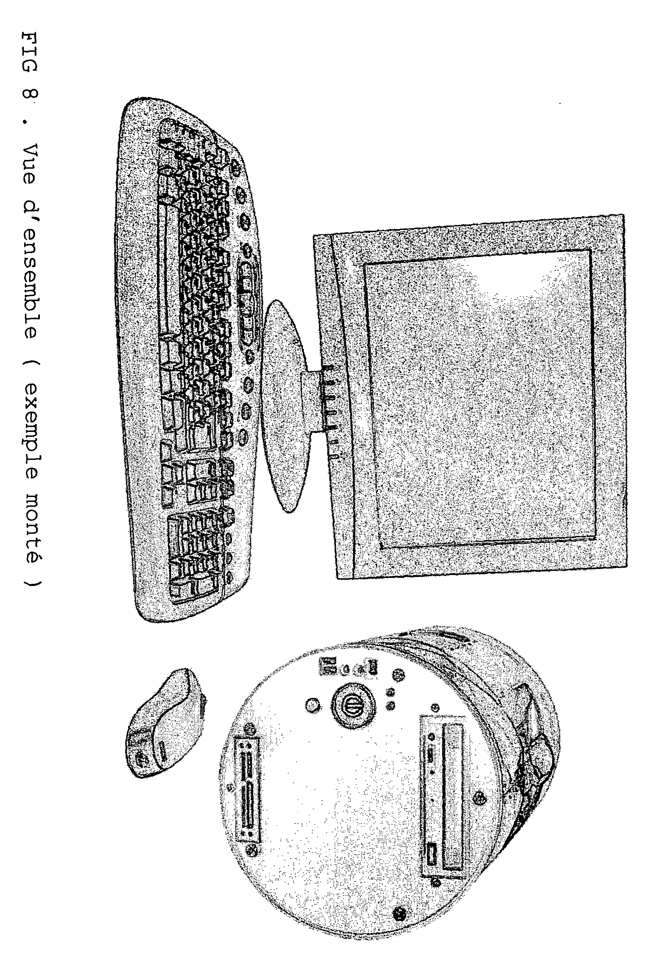

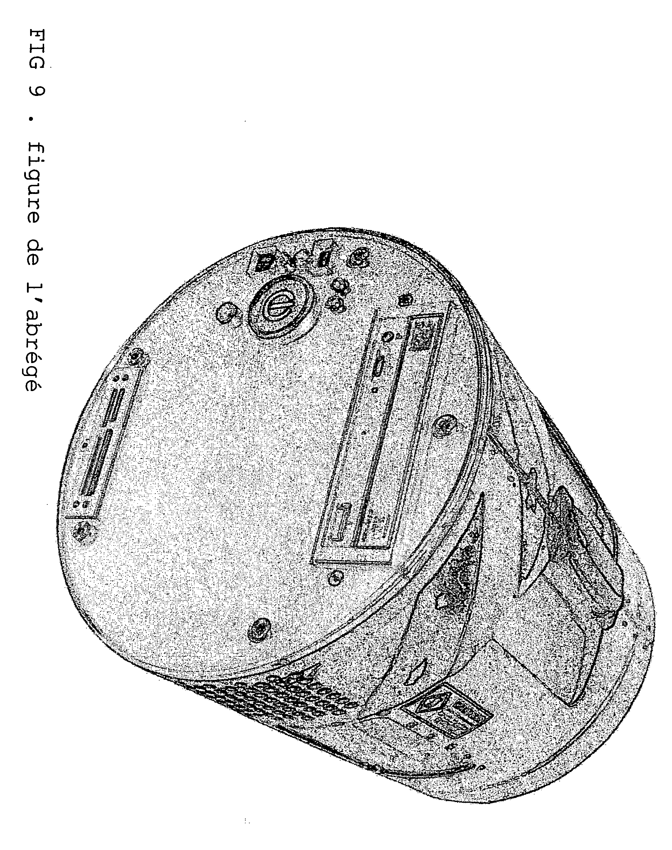

La documentation de l'ensemble du procédé du customisation est illustré par des exemples représentés en figure 7/9 qui montrent de multiples possibilités de mise en place pour chaque catégorie de customisation ( il s'agit d'exemples d'illustrations et titre indicatif - elles sont aussi facultatives) . Afin d'apporter un maximum de clarté au document , on repère chaque effet possible de customisation par les annotations suivantes :
A )exemple de customisation « superficielle » en face avant
B )exemple de customisation « superficielle » en zone latérale
C )exemple de customisation « lourde » en zone face avant ( ex : une mise en place d'un afficheur a cristaux liquides )
D )exemple de customisation « lourde » en zone latérale du produit ( ex : une simple découpe avec zone translucide )

De plus - et au travers des cas A ) , B ) , C ) ou D ) le manufacturier du boîtier a la possibilité de customiser ou faire customiser le boîtier en amont afin d'étoffer sa gamme et proposer davantage de solutions pour sa clientèle , suite par exemple a une étude de marché qu'il aura mené , ou encore un contrat spécifique avec une enseigne ( publicité par logo par exemple ) , une marque ou tout simplement suite aux choix définis en relation avec sa clientèle - en somme , la customisation offre un maximum de flexibilité pour répondre au mieux et au plus de demandes possible et différentes .
Toutefois , il convient de souligner le fait que l'action de customiser le boîtier d'une sorte ou d'une autre peut est accessible a tous ( soit vendeur, soit utilisateur final ) pourvu que l'une ou l'autres des catégories s'entoure des quelques moyens et dispositifs nécessaires a la réalisation de cette opération

Note : Dans le cadre d'une customisation dite « superficielle » , il est également important de préciser le fait que cette opération n'intervient pas sur la structure maîtresse du produit et que par conséquent , elle n'altère ni les caractéristiques mécaniques du boîtier , ni sa résistance globale en cours d'opération , et ceci , quelque soit l'état de montage des composants internes ( montage partiel ou complet ).

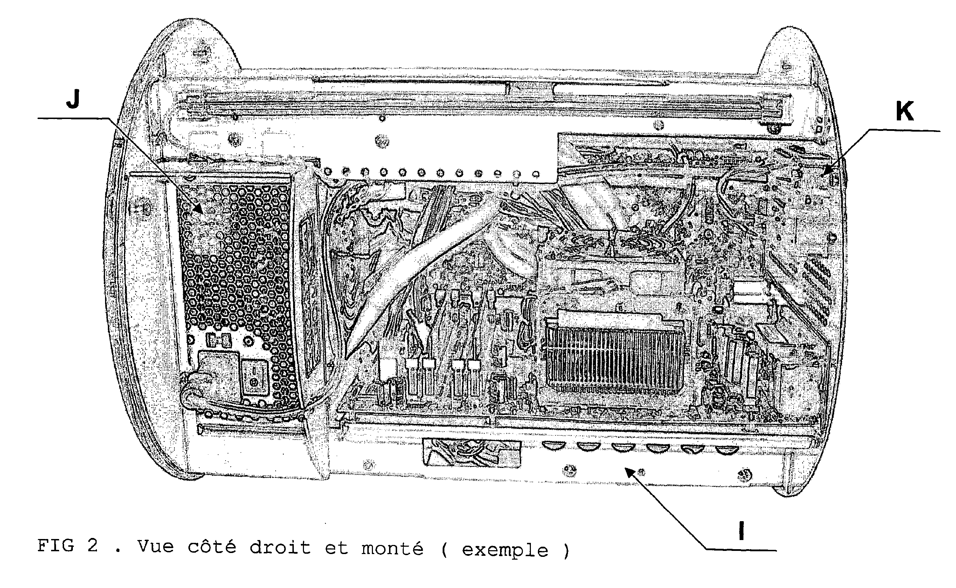

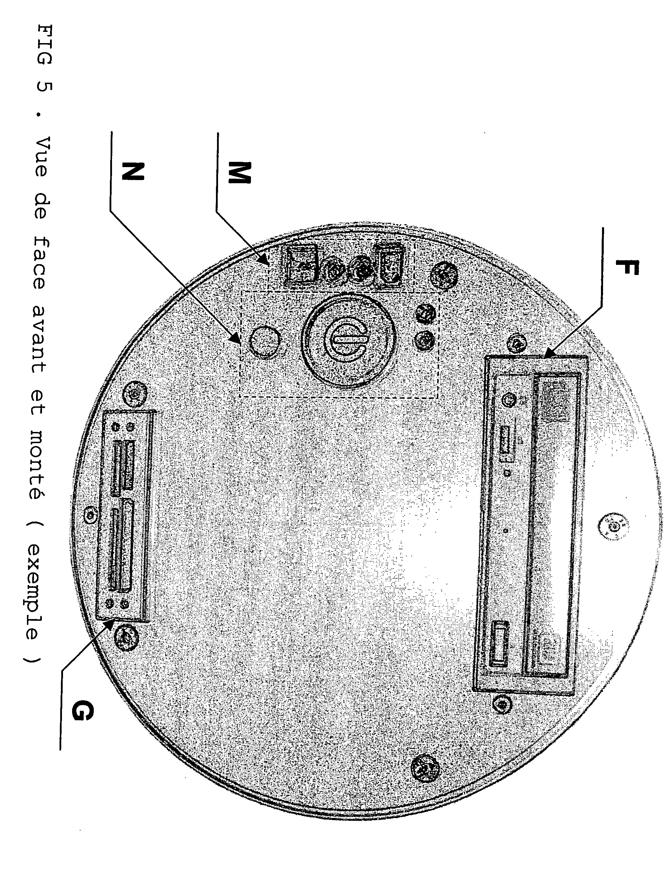

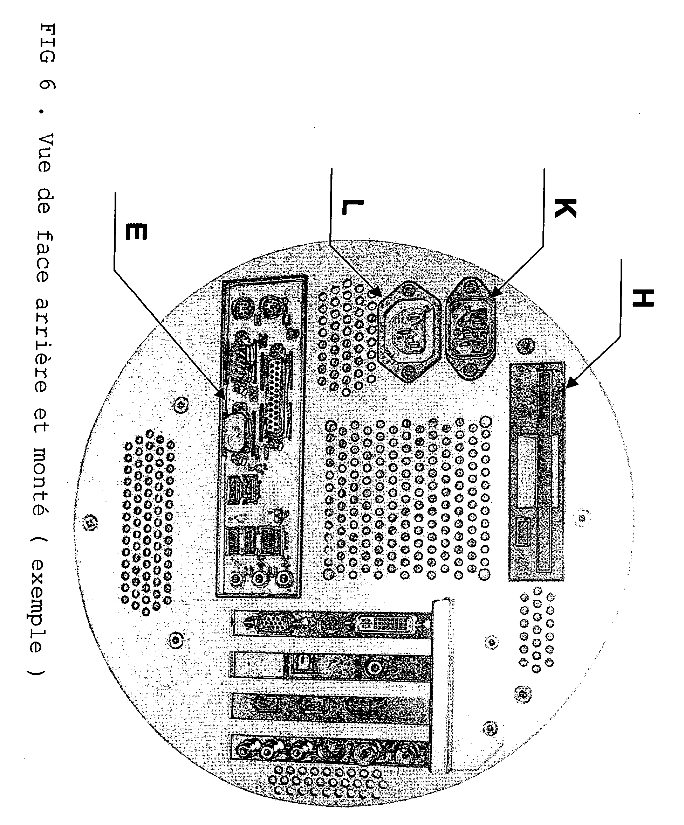

Les caractéristiques techniques et sommaire de ce boîtier se définissent essentiellement par le type de composants qu'il est susceptible d'intégrer , une gamme totalement « standard » avec :
- Une carte mère principale ( dont ses périphériques de sortie spécifiques et définis par le constructeur de cette carte mère : « AGP » , « PCI » , son , USB , connecteur clavier et souris .... ) sont disponibles et accessibles de l'extérieur du boîtier afin de permettre leur raccordement vers les éléments extérieurs ( écran, clavier , souris , haut parleurs ... ) ( figure relative : FIG 6/9 , annotation E ) ).
- Un emplacement type périphérique CD ROM ou 5 pouces ¼ ( qui peut être un lecteur CD , lecteur DVD , Graveur CD ROM , Graveur de DVD ...)en face avant ( figure relative : FIG 5/9 annotation F ) ).
- Plusieurs emplacements de type 3 pouces ½ , répartis en face avant et arrière du boîtier ( ex d'intégration : lecteur de disquette , lecteur de cartes mémoires ... ) ( figures relatives : FIG 5/9 annotation G ) et 6/9 annotation H ) )
- Plusieurs emplacements type disques dur , placement interne ( exemple de localisation : FIG 2/9 et 4/9 , annotation I ))
- Une alimentation électrique de l'ensemble des éléments de l'ordinateur ( figure relative : FIG 2/9 , annotation J ), alimentation type « secteur » , par le biais d'un connecteur accessible de l'extérieur du boîtier et exclusif a cet emploi . ( figure relative : FIG 6/9 et FIG 2/9 , annotation K ) )
- Eventuellement , possibilité de raccorder un deuxième produit électrique ( ex : écran / moniteur principal ) par le biais d'un connecteur électrique en doublon ( figure relative : FIG 6/9 annotation L ) ).
- Eventuellement , un groupe de connecteurs placés face a l'utilisateur final du produit qui lui confèrent la capacité de raccorder des périphériques externes rapidement et simplement ( ex : raccordement unité de stockage USB , caméscope , appareil photo numérique , cartes mémoire , casque audio , microphone ... ) ( figure relative : FIG 5/9 annotation M ) ).
- Eventuellement un dispositif placé en face avant permettant la mise en fonctionnement ou arrêt de l'ensemble du produit , possibilité également d'inclure un dispositif de réinitialisation ( « RESET » ) avec éventuellement les voyants d'activité de marche de l'ordinateur et activité périphériques internes ( figure relative : FIG 5/9 annotation N ) ).

## Revendications

1. Dispositif d'un ensemble mécanique de maintient et d'assemblage d'un groupe de composants informatiques destiné a constituer l'ensemble d'une unité centrale informatique ( ordinateur )

2. Dispositif selon la revendication 1 **caractérisée en ce que** l'ensemble des pièces mécaniques assemblées permettent d'aboutir a un produit finit de forme assimilable cylindrique .

3. Dispositif selon la revendication 2 **caractérisée en ce que** l'ensemble de l'appareil soit transportable par le biais d'un agencement spécifique de poignée accessible en partie externe du produit

4. Dispositif selon la revendication 2 **caractérisée en ce que** l'ensemble puisse être placé sur une surface plane .

5. Dispositif selon la revendication 2 **caractérisée en ce que** le produit global puisse recevoir une customisation de manière a modifier son aspect général extérieur - et ce , sur toutes les parties externes du produit .
